# FASCICULE DE BREVET EUROPEEN

(11) **EP 2 681 783 B1**
(45) Date de publication et mention de la délivrance du brevet: **27.06.2018**
(21) Numéro de dépôt: 12706610.8
(22) Date de dépôt: 02.03.2012
(51) Int. Cl.: H01M 2/34, H01M 10/48, H01M 10/42

(54) **BATTERIE ELEMENTAIRE INTEGRANT DES FONCTIONS DE GESTION**
PRIMÄRBATTERIE MIT INTEGRIERTEN VERWALTUNGSFUNKTIONEN
PRIMARY BATTERY WITH BUILT-IN MANAGEMENT FUNCTIONS

(30) Priorité: 02.03.2011 FR 1151690
(43) Date de publication de la demande: 08.01.2014
(73) Titulaire: Commissariat à l'Énergie Atomique et aux Énergies Alternatives, 75015 Paris (FR); Renault S.A.S., 92100 Boulogne-Billancourt (FR)
(72) Inventeur: DESPESSE, Ghislain, 38120 Saint Egreve (FR)
(74) Mandataire: Novaimo
(86) Numéro de dépôt international: PCT/EP2012/053685
(87) Numéro de publication internationale: WO 2012/117111

(56) Documents cités:
- EP-A1- 1 811 591
- EP-A2- 1 775 792
- WO-A1-93/15935
- US-A- 5 731 686
- US-A1- 2003 020 479

## Description

L'invention concerne une batterie élémentaire. Elle concerne aussi une batterie comprenant une telle batterie élémentaire. Elle concerne aussi une batterie de plusieurs étages de plusieurs batteries élémentaires. Elle concerne aussi un procédé de gestion de batterie.

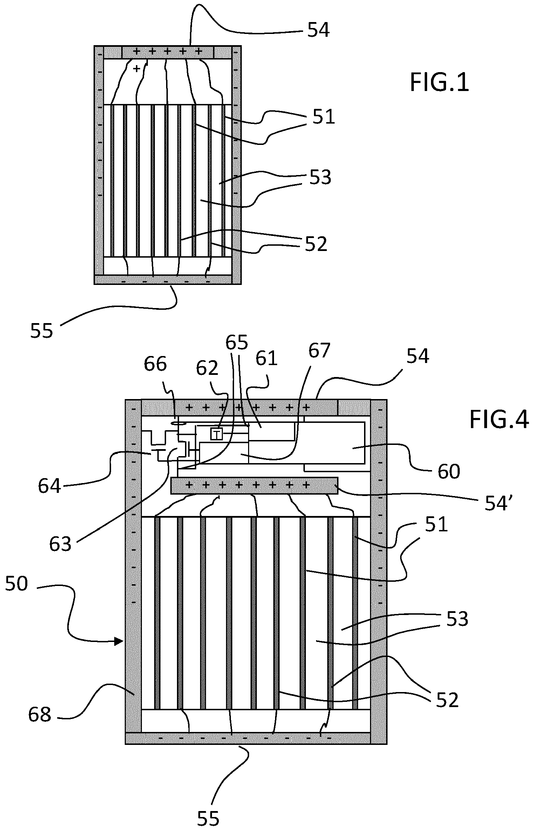

La figure 1 illustre la structure interne d'une batterie élémentaire de type Lithium-Ion couramment utilisée dans l'état de la technique. Une telle batterie se présente sous une forme cylindrique, comprend une multitude d'électrodes positives 51 et négatives 52, se présentant sous la forme de cylindres concentriques imbriqués ou de couches enroulées en forme de spirale, séparés par des couches d'électrolytes 53 et de membranes non représentés. Ces éléments représentent la partie active de la structure de la batterie élémentaire, c'est-à-dire qu'ils forment un ensemble qui participe directement à la fonction de stockage et restitution d'énergie électrique. Dans cet exemple, cette partie active est de nature chimique. En remarque, une telle batterie élémentaire, aussi appelée cellule élémentaire, peut comprendre une partie active basée sur d'autres composants chimiques, ou une partie active de nature capacitive. D'autre part, la partie active de la batterie élémentaire est disposée dans un boîtier dont une première face externe forme la borne positive 54 ou premier collecteur de courant de la batterie et une seconde face externe forme la borne négative 55 ou second collecteur de courant. Ce boîtier a pour fonction le maintien et support de la partie active de la batterie, et son étanchéité vis-à-vis de l'extérieur. Il enferme un assemblage physique dont la connectique électrique est non modifiable pour un utilisateur de la batterie élémentaire, qui voit un courant sortant égal au courant entrant sur ses deux bornes 54, 55. Nous appellerons donc batterie élémentaire cet ensemble formé par une partie active et un boîtier avec deux bornes.

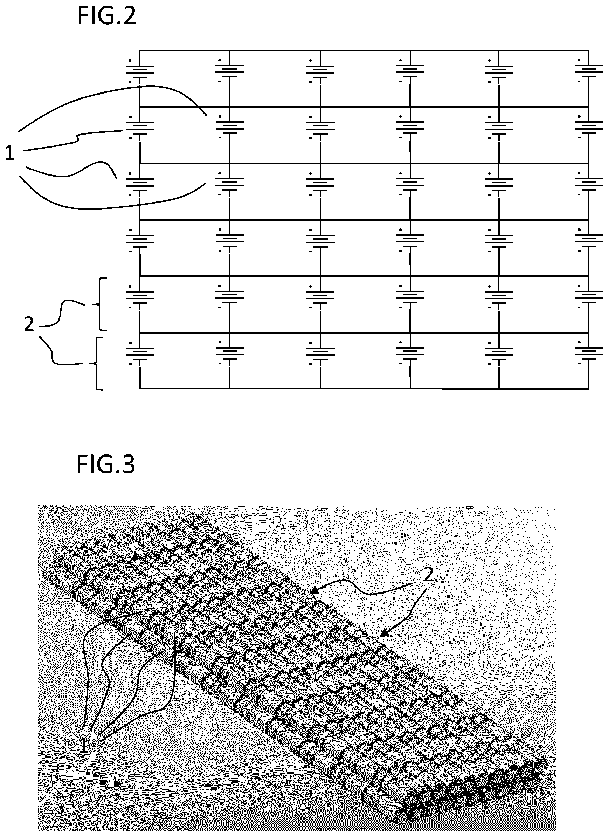

Les figures 2 et 3 représentent un pack batterie selon l'état de la technique, composé d'une multitude de batteries élémentaires, par exemple du type de la batterie élémentaire explicitée ci-dessus. Un tel pack batterie comprend des entités élémentaires appelées cellules de stockage d'énergie ou plus simplement cellules 1, qui peuvent comprendre une ou plusieurs batteries élémentaires disposée(s) dans un même compartiment selon une architecture et une connectique électrique bien définie. Pour simplifier la description, nous appellerons par la suite plus simplement batterie toute entité pouvant comprendre une ou plusieurs batteries élémentaires, incluant donc un « pack batterie » dans cette définition.

Une batterie courante selon l'état de la technique, représentée sur les figures 2 et 3, comprend plusieurs étages ou modules 2, disposés en série, et chaque module comprend plusieurs cellules 1 disposées en parallèle, comme cela est illustré schématiquement sur la figure 2. La figure 3 représente une architecture courante d'une telle batterie, pour laquelle chaque cellule présente une forme cylindrique et est par exemple une batterie de type lithium-ion. Dans cet exemple, chaque module 2 comprend deux rangées de dix cellules 1, dont les faces latérales cylindriques de cellules voisines sont en contact. De plus, la batterie comprend onze modules 2 superposés, disposés de sorte que les axes des cellules cylindriques des différents modules sont alignés pour que les cellules soient ainsi alignées dans leur direction longitudinale. Cette disposition permet ainsi d'obtenir un encombrement minimal.

La gestion d'une telle batterie de l'état de la technique comprend en général une observation des grandeurs électriques de sortie pour en déduire un diagnostic de son fonctionnement. Cette approche s'avère insuffisante car elle ne permet pas de déterminer avec précision les zones de la batterie, comme les modules ou certains groupes de cellules, qui sont par exemple défaillants. Il en résulte dans la pratique une mauvaise optimisation du fonctionnement de la batterie et une baisse très rapide de ses performances dès qu'elle présente une partie défaillante, accompagnée souvent d'une aggravation rapide de son état et un vieillissement prématuré.

Pour améliorer cette approche globale, il existe certains procédés de diagnostic qui consistent à observer certaines grandeurs au niveau des modules de la batterie. Cette seconde approche permet plus précisément d'observer localement le comportement particulier de certains modules de la batterie. Toutefois, sa mise en oeuvre est complexe et nécessite l'utilisation de nombreux fils électriques, pour relier un dispositif central de diagnostic à chaque module, ce qui peut induire de fort risques électriques car les fils sont susceptibles de chauffer, ou de se dénuder par frottement puis générer des courts-circuits, par exemple entre deux étages relativement éloignés et de différence de potentiel élevée. D'autre part, cette solution nécessite une isolation galvanique intermédiaire pour protéger le dispositif central de diagnostic, dont le potentiel associé à son alimentation peut-être très éloigné des potentiels présents dans la batterie. Enfin, elle ne permet d'agir que de manière insatisfaisante sur le fonctionnement global de la batterie.

Le document EP1811591 décrit une batterie comprenant plusieurs cellules. Une partie de contrôle comprenant des interrupteurs, instruments de mesures et électronique de commande est intégrée au sein d'un boîtier comprenant les cellules. Dans cette batterie, le fonctionnement d'une cellule n'est pas optimisé, notamment au niveau de la fonction sécurité
propre.

Ainsi, il existe un besoin d'une solution améliorée de stockage d'énergie permettant de résoudre au moins une partie des inconvénients des solutions existantes.

Notamment, un objet de l'invention est de proposer une solution de stockage d'énergie qui permet de garantir un fonctionnement fiable et allongé dans le temps.

A cet effet, l'invention repose sur une batterie élémentaire selon la revendication 1, comprenant une partie active disposée dans un boîtier et au moins deux bornes, caractérisée en ce qu'elle comprend au moins un interrupteur série disposé au sein de son boitier apte à déconnecter la partie active d'une des bornes de la batterie élémentaire et en ce qu'elle comprend un interrupteur parallèle disposé au sein de son boitier entre les deux bornes de la batterie élémentaire.

L'invention porte aussi sur une batterie, caractérisée en ce qu'elle comprend plusieurs batteries élémentaires telles que décrites précédemment.

L'invention porte aussi sur un véhicule automobile, caractérisé en ce qu'il comprend une batterie telle que décrite précédemment.

L'invention porte aussi sur un procédé de gestion d'une batterie élémentaire selon la revendication 12, telle que décrite précédemment, caractérisé en ce qu'il comprend une étape de détermination de la position d'un interrupteur en fonction de l'état de la batterie élémentaire et en fonction du besoin d'une charge reliée à la batterie élémentaire ou en fonction du besoin de recharge de la batterie élémentaire.

L'invention est plus particulièrement définie par les revendications.

Ces objets, caractéristiques et avantages de la présente invention seront exposés en détail dans la description suivante de modes de réalisation particuliers faits à titre non-limitatif en relation avec les figures jointes parmi lesquelles :
La figure 1 illustre la structure interne d'une batterie élémentaire de type Lithium-Ion selon l'état de la technique.
La figure 2 représente schématiquement la structure d'une batterie selon un état de la technique.
La figure 3 représente en perspective l'architecture réelle d'une telle batterie de l'état de la technique.
La figure 4 illustre la structure interne d'une batterie élémentaire selon un premier mode de réalisation de l'invention.
Les figures 5 à 7 illustrent la structure interne d'une batterie élémentaire selon un second mode de réalisation de l'invention.
La figure 8 illustre un mode de réalisation d'une commande asservie d'une batterie élémentaire selon l'invention.
La figure 9 représente schématiquement une batterie selon un mode de réalisation de l'invention.
La figure 10 représente schématiquement un module de la batterie selon le mode de réalisation de l'invention.
La figure 11 illustre schématiquement la mise en oeuvre du principe de communication par courant porteur au sein de la batterie selon un mode de réalisation de l'invention.
La figure 12 illustre schématiquement la mise en oeuvre d'une mesure d'impédance électrique selon un mode de réalisation de l'invention.

Selon un aspect avantageux de l'invention, au moins un interrupteur série et parallèle et éventuellement des composants complémentaires sont intégrés au sein même d'une batterie élémentaire, telle que définie précédemment, pour permettre un fonctionnement amélioré de la batterie élémentaire, permettant, par l'intermédiaire d'un dispositif de commande de cet interrupteur, d'utiliser ou non la batterie élémentaire en fonction des besoins et des caractéristiques de la batterie élémentaire elle-même, comme son état de charge et de santé. Cela permet l'optimisation de la batterie élémentaire, l'augmentation de ses performances et de sa durée de vie. Cela entraîne aussi une grande flexibilité de fonctionnement des batteries comprenant plusieurs batteries élémentaires implémentant cette solution.

Dans les figures suivantes, les mêmes références seront utilisées pour des éléments identiques ou similaires dans chaque mode de réalisation de l'invention, pour une raison de simplification de la description.

La figure 4 représente une batterie élémentaire de type Lithium-Ion selon un premier mode de réalisation de l'invention, dans lequel des fonctions supplémentaires sont intégrées au sein même de la structure de la batterie 50, qui comprend la même partie active que la batterie de l'état de la technique représentée sur la figure 1. Pour faciliter l'intégration de composants au sein de la batterie 50, une borne positive 54' intérieure est ajoutée, directement reliée à la partie active de stockage d'énergie de la batterie élémentaire. La batterie comprend ainsi un transistor 63 disposé entre les deux bornes positives 54', 54 en série avec la partie active de la batterie et un second transistor 64 disposé en parallèle entre les bornes 54, 55 (en parallèle de la partie active en série avec le transistor 63), qui remplissent une fonction d'interrupteurs. La batterie comprend donc une première branche entre ses bornes 54, 55 sur laquelle sont disposés en série la partie active de la batterie et un interrupteur, apte à déconnecter ou pas la partie active d'une des deux bornes 54, 55. Elle comprend une seconde branche entre les deux bornes 54, 55, parallèle à cette première branche, sur laquelle se trouve un second interrupteur, apte à shunter la partie active de la batterie élémentaire. Cette dernière comprend de plus un dispositif de commande de ces interrupteurs, comprenant un microcontrôleur 60 avec une interface d'entrée 61, qui peut être analogique et communiquant avec le microcontrôleur 60 par l'intermédiaire d'un convertisseur analogique/numérique intégré ou qui peut être numérique, et un circuit de commande 67, qui reçoit des instructions du microcontrôleur et transmet les commandes d'ouverture et/ou fermeture aux interrupteurs. Enfin, la batterie 50 intègre un capteur de température 62, un ou plusieurs capteurs de tension 65 et un capteur de courant 66. Tous ces composants sont donc montés dans un volume supérieur de la batterie à l'intérieur du boîtier 68 de la batterie élémentaire, aménagé entre la borne positive intérieure 54' mentionnée précédemment et une borne positive extérieure 54, accessible depuis l'extérieur du boîtier 68 pour toute utilisation de la batterie. Naturellement, en variante, ces composants pourraient être agencés différemment, à l'intérieur du boîtier 68 de la batterie 50, ou la batterie élémentaire pourrait n'intégrer qu'une partie de ces composants. Par exemple, la batterie élémentaire pourrait être rectangulaire, comme une batterie plate pour un téléphone portable. Par ailleurs, la polarité des bornes de la partie active pourraient être inversée, ainsi que celle de la batterie élémentaire (transistor série placé du coté de la borne moins au lieu de la borne plus). Selon une variante de réalisation, ces composants électroniques pourraient être fixés sur les parois de la batterie élémentaire, par exemple par collage.

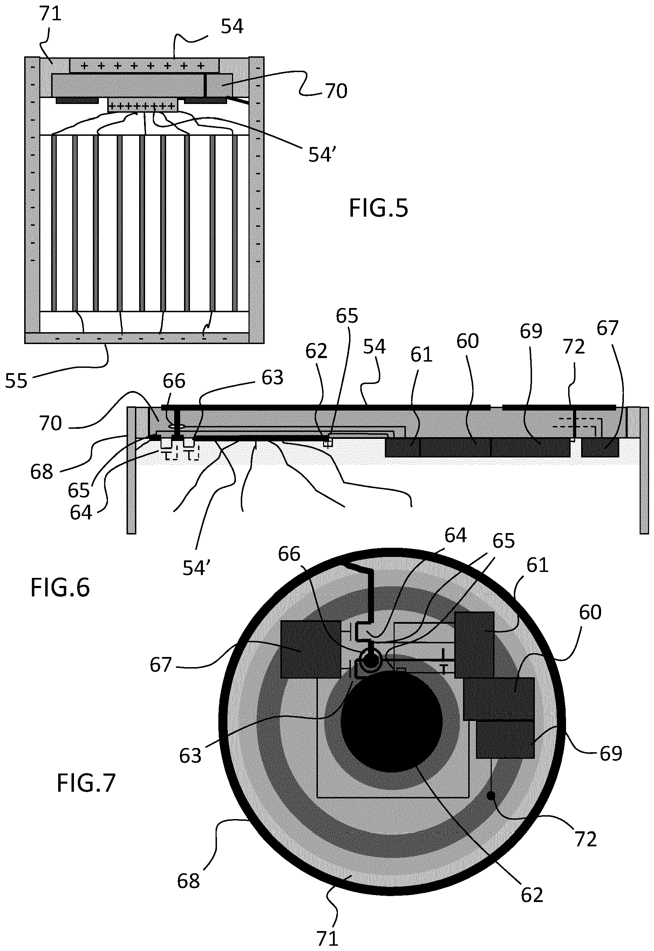

Les figures 5 à 7 illustrent un second mode de réalisation de l'invention, dans lequel les différents composants ajoutés au sein de la batterie élémentaire 50 sont positionnés sur une carte électronique de type circuit imprimé 70, afin de réduire le nombre de fils nécessaires et faciliter la fabrication à grande échelle d'une telle batterie élémentaire. La figure 5 illustre une telle réalisation, dans laquelle une carte électronique 70 se trouve entre les deux bornes positives 54', 54 de la batterie élémentaire et directement connectée à ces deux bornes. La partie latérale de la carte électronique est recouverte d'une couche d'étanchéité 71, par exemple comprenant une colle, qui permet la séparation des deux bornes 54, 55 de la batterie élémentaire tout en protégeant, et fixant de manière étanche la carte électronique. De plus, avantageusement, les composants positionnés sur la carte électronique 70 sont protégés par une couche de protection isolante, de type vernis.

Les figures 6 et 7 illustrent en détail un exemple de réalisation de la carte électronique 70. Elle comprend une liaison inférieure avec la borne positive intérieure 54' de la batterie élémentaire. La carte intègre sur sa surface inférieure les composants suivants : un circuit de commande 67, qui pilote les transistors de puissance à partir des signaux faible puissance et faible tension issus d'un microcontrôleur 60 ou de circuits logiques. Dans cette réalisation, le microcontrôleur 60 est relié aux différents capteurs, un capteur de température 62, deux capteurs de tension 65, pour mesurer respectivement la tension des bornes positive intérieure 54' et extérieure 54, et un capteur de courant 66, par un convertisseur analogique numérique de type CAN par l'intermédiaire d'une interface d'entrée 61. La carte électronique 70 intègre de plus un transistor série 63, placé entre les bornes positives 54, 54' et un second transistor en parallèle 64 placé entre les bornes 54, 55, comme explicité dans le premier mode de réalisation. De plus, selon cette variante de réalisation, le microcontrôleur 60 est de plus doté d'une interface de communication 69, reliée par une voie traversant le boîtier 68 de la batterie élémentaire à une borne de communication 72, accessible depuis l'extérieur de la batterie élémentaire. Cette borne de communication 72 permet par exemple une communication avec d'autres batteries élémentaires qui seraient placées en parallèle sur un même module, ou avec un système de pilotage extérieur. Dans un tel cas, une isolation galvanique de la communication peut être mise en place.

L'intégration de ces composants au sein d'une batterie élémentaire permet une utilisation intelligente et autonome ou semi-autonome de la batterie élémentaire. Notamment, les capteurs de mesure permettent à un calculateur de déduire l'état de charge et/ou de santé de la batterie élémentaire. Ensuite, le transistor série 63, qui remplit une fonction d'interrupteur, permet par l'intermédiaire du circuit de commande de déconnecter ou pas la batterie élémentaire. Si l'interrupteur est ouvert, la batterie élémentaire ne peut ni être chargée depuis l'extérieur, ni délivrée une tension vers l'extérieur. En remarque, l'interrupteur parallèle permet de créer un by-pass de la batterie élémentaire, lorsque l'interrupteur série est ouvert pour éviter tout court-circuit, ce qui permet un passage de courant qui peut être utile lorsque la batterie élémentaire est intégrée dans une structure complexe de plusieurs batteries élémentaires. Enfin, tous ces composants sont directement alimentés par la batterie élémentaire elle-même, ce qui leur permet un fonctionnement autonome, sans risque de court-circuit ou nécessité d'isolation galvanique pour une liaison avec une source externe de potentiel par exemple très différent (par exemple avec un potentiel de référence séparé de plus de 100V).

Naturellement, l'invention ne se limite pas aux exemples précédents. Notamment, plusieurs capteurs de mesure ont été implémentés mais en variante d'autres nombres de capteurs de mesure peuvent être choisis. De plus, il est possible d'utiliser d'autres types de capteurs de mesure que ceux décrits, pour mesurer d'autres grandeurs caractéristiques de l'état d'une cellule que la tension, le courant ou la température. L'utilisation d'un capteur de mesure reste toutefois optionnelle.

Chaque batterie élémentaire peut présenter toute autre forme que celles illustrées, comme une structure plane par exemple à base de couches superposées. D'autre part, la partie active de la batterie élémentaire pourrait être de toute nature, basée sur n'importe quelle technologie de stockage d'énergie.

Les différents transistors 63, 64 mentionnés remplissent une fonction d'interrupteurs. En variante, tout autre type d'interrupteur que ceux décrits pourrait être implémenté, et selon une architecture qui peut varier. Par exemple, en variante, l'interrupteur série peut être formé d'un transistor présentant une diode inverse, ou être associé à une diode distincte que l'on place volontairement en inverse, ce qui permet de continuer à charger la batterie élémentaire même si le transistor série est commandé en ouverture, sauf si l'interrupteur parallèle est fermé et prend le relais sur la circulation du courant. Selon un mode simplifié d'implémentation de l'invention, un seul interrupteur série peut suffire, puisqu'il permet de déconnecter la batterie élémentaire, de remplir par exemple une simple fonction de mise en sécurité. Dans le cas d'utilisation d'une carte électronique intégrée au sein d'une batterie élémentaire, il est possible d'utiliser plusieurs transistors parallèle pour remplir la fonction d'interrupteur parallèle, afin de réduire la résistance globale à l'état fermé obtenue avec un seul transistor, de faire circuler un courant plus important ou de répartir l'échauffement en plusieurs points sur la carte électronique 70 pour faciliter l'évacuation de la chaleur.

De plus, tout ou partie du dispositif de commande d'un interrupteur peut se trouver au sein de la batterie élémentaire et/ou à l'extérieur. Ainsi, en variante de la réalisation totalement intégrée et autonome représentée sur les figures 4 à 7, un calculateur central peut par exemple donner des instructions à un simple circuit de commande présent dans la batterie élémentaire, par une borne de communication, ou le dispositif de commande peut se trouver totalement hors de la batterie élémentaire.

L'invention porte aussi sur une batterie comprenant plusieurs batteries élémentaires, dont au moins une implémente le concept de l'invention tel que décrit précédemment. De préférence, une telle batterie comprendra un pourcentage significatif de batteries élémentaires selon l'invention, et avantageusement, la totalité de ses batteries élémentaires correspondront à une batterie élémentaire selon l'invention.

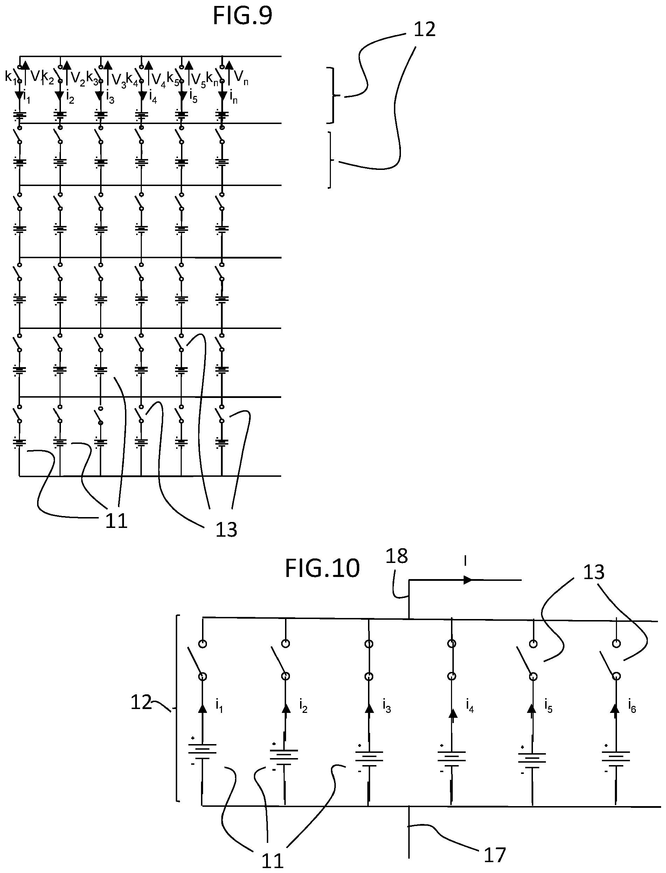

La figure 9 représente schématiquement un mode de réalisation de l'invention dans lequel une batterie comprend une multitude de batteries élémentaires selon l'invention organisées en plusieurs modules 12 comme dans l'état de la technique. Ainsi, chaque module 12 comprend plusieurs cellules actives 11 associées à un interrupteur 13 en série, cet ensemble formé par une cellule active 11, que nous appellerons plus simplement cellule, et un interrupteur 13 correspondant à une batterie élémentaire telle que décrite précédemment.

La figure 10 illustre plus en détail un module 12 de la batterie selon le mode de réalisation de l'invention. Il comprend une borne inférieure 17, reliée à un module voisin inférieur, et une borne supérieure 18 pour une liaison série avec le module voisin supérieur. Selon cet exemple, ce module comprend six cellules 11 disposées en parallèle. En effet, il comprend six branches parallèles entre ses bornes 17, 18 comprenant chacune une batterie élémentaire. Naturellement, il pourrait en variante comprendre tout autre nombre de cellules. Sur l'exemple illustré, seules les troisième et quatrième cellules sont utilisées car leurs interrupteurs 13 respectifs sont fermés, alors que tous les autres interrupteurs 13 sont ouverts.

L'invention ne se limite pas à la batterie décrite précédemment, et peut être implémentée pour toute structure comprenant au moins une batterie élémentaire selon le concept de l'invention, ou comprenant des étages de plusieurs cellules, tout ou parties des cellules comprenant un arrangement quelconque de batteries élémentaires selon le concept de l'invention.

Une telle batterie est particulièrement adaptée pour l'alimentation du moyen d'entraînement d'un véhicule automobile électrique ou hybride.

L'invention porte aussi sur un procédé de gestion d'une batterie élémentaire telle que décrite précédemment, qui comprend une étape de détermination de la position d'un interrupteur en fonction de l'état de la batterie élémentaire et en fonction du besoin d'une charge reliée à la batterie élémentaire.

L'invention porte aussi sur un procédé de gestion d'une batterie, qui comprend les étapes essentielles suivantes :
- mesure d'au moins une grandeur représentative de l'état de la cellule ;
- transmission de la grandeur mesurée à au moins un calculateur ;
- détermination de la position d'un interrupteur d'une batterie élémentaire en prenant en compte la grandeur mesurée ;
- transmission d'une commande d'ouverture ou fermeture d'un interrupteur d'une batterie élémentaire en fonction de la détermination précédente.

Le procédé de gestion de batterie permet ainsi de déterminer à chaque instant la position de plusieurs interrupteurs des batteries élémentaires, de façon à équilibrer chacune des batteries élémentaires ou cellules d'un module et d'aiguiller le courant au sein de chaque module. Le procédé pourra notamment comprendre une étape intermédiaire consistant à diagnostiquer une défaillance et/ou un état à risque d'une cellule, en reconnaissant les cellules défectueuses, en surchauffe, etc., à partir de la grandeur mesurée au niveau d'une cellule, afin de déconnecter ou écarter du fonctionnement global de la batterie les cellules concernées, en ouvrant par exemple leur interrupteur série, et/ou en fermant un interrupteur parallèle.

Ainsi, en revenant à l'exemple illustré sur la figure 10, il apparaît que les cellules 1, 2, 5, et 6 ont été écartées. Dans une batterie comprenant un nombre important de cellules et de modules, il est facile d'en écarter un nombre significatif, par exemple 10 % du nombre total de cellules, sans pénaliser l'utilisation de la batterie car le courant demandé est généralement inférieur au courant maximal disponible, utilisé uniquement dans une situation de crête de consommation. D'ailleurs, en cas de pic de consommation, il sera toujours possible de faire appel momentanément aux cellules écartées pour répondre au besoin plus important. Comme ces cellules resteront la plupart du temps inutilisées, elles ne mettront pas en danger la santé globale de la batterie.

Le procédé de gestion de batterie selon le mode de réalisation de l'invention comprend donc une étape de diagnostic d'une cellule incluant une étape d'estimation de l'état d'une cellule, qui peut comprendre à titre d'exemple non limitatif une ou plusieurs mesures de courant, de tension, de température, de spectrométrie d'impédance ou autres au niveau d'au moins une cellule, tout ou partie des cellules de la batterie. Pour cela, la grandeur mesurée peut être comparée à des seuils prédéfinis. Le pilotage de chaque transistor de cellule dépend alors de cet état estimé de la cellule, et permet par exemple de déconnecter une cellule si elle fait apparaitre un courant ou une température anormale ou si elle fournie un courant inverse aux autres cellules, comme dans une situation de cellules voisines qui se déchargent au travers d'une cellule défaillante.

L'étape de diagnostic d'une cellule comprend notamment une étape d'estimation de la charge de la cellule et une estimation de son état de santé. De même, le pilotage de chaque transistor de cellule dépend de ces estimations. Il peut notamment être établi une comparaison de la charge estimée de la cellule avec un seuil de décharge et/ou un seuil de charge.

D'autre part, le procédé de gestion de batterie peut mettre en oeuvre une modification cyclique de l'utilisation des cellules, de sorte que tout ou partie des cellules de la batterie passent d'un état de fonctionnement normal à un état déconnecté et réciproquement, selon un rapport cyclique déterminé qui peut être fixe ou variable. Ce rapport cyclique permet de fixer la proportion du temps d'utilisation de chaque cellule de la batterie et de faire en sorte par exemple que la proportion du temps d'utilisation des cellules défectueuses ou en surchauffe soit plus faible que celle des cellules sans surchauffe. Un tel cycle peut être utilisé pour tout ou partie des cellules, même pour des cellules saines, en fonction du besoin global en courant et tension. Les cycles de fonctionnement des différentes cellules peuvent être décalés dans le temps pour obtenir à chaque instant un nombre sensiblement équivalent de cellules actives par exemple, en garantissant à chaque instant un nombre suffisant de cellules actives pour satisfaire le courant demandé.

Ainsi, le procédé de gestion de batterie met en oeuvre les étapes suivantes :
- équilibrage des modules et/ou cellules entre eux, en utilisant en priorité les modules et/ou cellules les plus chargés lorsque la batterie est connectée à une charge et les modules et/ou cellules les moins chargés lors de la recharge de la batterie ;
- équilibrage des modules et/ou cellules en modifiant le taux moyen d'utilisation des modules et/ou cellules, mais sans utiliser les mêmes modules et/ou cellules en permanence, de sorte que la charge des modules et/ou cellules s'équilibre. En effet, si par exemple un module est très chargé par rapport aux autres modules et qu'il est utilisé en permanence afin que sa charge atteigne au plus vite la charge des autres modules, il risque de surchauffer. L'équilibrage est de préférence réalisé en permanence durant la charge ou l'utilisation de la batterie, et il n'est ainsi pas nécessaire de solliciter fortement un module pour arriver rapidement à l'équilibre. En modifiant simplement le taux moyen d'utilisation d'un tel module de quelques pourcentages par rapport aux autres modules, on peut assurer l'équilibrage de la charge des modules sans trop déséquilibrer le stress et réchauffement des cellules du module. Cet équilibrage s'applique de la même manière pour les cellules, d'un même module ou non ;

- les modules sont choisis en fonction du courant qu'ils peuvent fournir, et sollicités quant ils sont aptes à fournir un courant supérieur ou égal au courant demandé. Dans les phases où le courant demandé est plus faible, on utilise les modules dont la capacité est plus faible ;
- limitation de l'utilisation des modules et/ou cellules dont la température est la plus élevée ou utilisation de manière préférentielle, lorsque le courant demandé est plus faible. De manière générique, il est évité que la température d'un module et/ou cellule dépasse un seuil ; ce risque de dépassement est anticipé. De manière optimale, la température au sein de la batterie est maintenue relativement homogène pour homogénéiser le vieillissement des cellules et augmenter leur durabilité.

En variante, d'autres stratégies sont imaginables et le procédé de gestion de la batterie peut par exemple comprendre les étapes suivantes :
- utilisation en priorité d'une partie de la batterie pour n'avoir à changer que cette partie de la batterie au premier changement nécessaire. Il est possible d'imaginer qu'une partie de la batterie soit plus facilement interchangeable ;
- utilisation selon un taux plus élevé des cellules optimisées pour résister à une utilisation intensive et limitation de la sollicitation du reste de la batterie, qui peut être optimisé pour apporter plutôt de la capacité énergétique. De manière plus générique, dans le cas d'une batterie hétérogène en technologie de cellule, c'est-à-dire réunissant des cellules de nature différente, il peut être intéressant d'avoir une hétérogénéité dans l'utilisation pour optimiser la performance globale en tenant compte des avantages de chaque cellule.

Le procédé de gestion de batterie peut comprendre les étapes spécifiques suivantes :
- dès que le taux de défaillance des cellules d'un même étage atteint un seuil on ordonne l'ouverture de toutes les cellules et l'activation d'un shunt, en fermant les interrupteurs parallèles, pour mettre hors service l'étage ;
- lorsqu'une cellule est défaillante, par exemple lorsqu'il existe une fuite de courant, une surchauffe, lorsqu'elle est trop déchargée (ce qui est par exemple détecté par un passage en dessous d'un seuil de tension) ou trop chargée (ce qui est par exemple détecté par un dépassement d'un seuil de tension ou d'un nombre d'ampères heure acceptable), elle se déconnecte par l'ouverture de son transistor série ;
- lorsqu'une cellule chauffe, elle peut se connecter/déconnecter selon un rapport cyclique, de sorte de limiter sa montée en température. Cet objectif peut être atteint par un asservissement du rapport cyclique en fonction de la température mesurée au niveau de la cellule ;
- si une cellule déconnectée voit la tension de l'étage descendre suffisamment en dessous de 0V (quelques -100mV par exemple), alors elle ferme son transistor parallèle (pas de risque de court-circuiter les cellules placées en parallèle puisque la tension passe d'elle-même par zéro : typiquement quand toutes les cellules du même étage sont déconnectées et qu'un courant est consommé sur le pack batterie). Un petit délai peut être prévu entre la détection du passage de la tension en dessous du seuil et la commande du transistor parallèle pour que les cellules voisines aient aussi eu le temps de détecter le passage du seuil ;
- lors de l'application d'un courant de recharge sur le pack batterie, si une cellule déconnectée voit la tension extérieure monter au-dessus de la tension maximale qu'une cellule peut atteindre en charge, alors elle ferme son transistor parallèle (pas de risques de court-circuiter les cellules placées en parallèle puisque pour que la tension puisse aller au-delà de ce seuil, il faut que toutes les cellules de l'étage soient ouvertes) ;
- si une cellule voit un courant trop élevé, ce qui peut notamment arriver lorsqu'il n'y a plus assez de cellules en parallèle pour fournir le courant demandé ou accepter le courant apporté, alors le transistor série de la cellule est ouvert, ce qui élimine le risque de détérioration de la cellule. Si suite à cette déconnexion, les cellules actives restantes placées en parallèle voient un courant trop élevé, elles vont aussi se déconnecter d'elle-même ;
- quand toutes les cellules d'un étage sont déconnectées, et si un courant est consommé sur la batterie, alors la tension au niveau de l'étage va chuter et tendre à être négative : à ce moment là, chacune des cellules va activer son transistor parallèle qui prendra le relais pour la circulation du courant dans la batterie ;
- quand toutes les cellules d'un étage sont déconnectées, et si un courant de recharge est apporté sur la batterie, alors la tension de l'étage va monter et dépasser la tension maximale de charge d'une cellule : dans ce cas, les cellules vont déclencher la fermeture de leur transistor parallèle ;
- pour être certain que toutes les cellules ont bien détecté le dépassement de seuil de tension, on peut volontairement mettre un petit retard sur la commande de l'interrupteur parallèle au niveau de chaque cellule pour bien laisser progresser la tension avant de la ramener à zéro par cette fermeture ;
- si une cellule s'est déconnectée suite à une décharge trop importante (passage au-dessous d'un seuil de tension), elle peut décider de se réactiver dès que la tension de l'étage tend à être supérieure à celle de la cellule (cas où l'interrupteur parallèle n'a pas été activé). Si l'interrupteur parallèle avait été activé, alors la décision de le désactiver peut se faire à partir d'une détection d'un courant dans le shunt, qui est dans le sens d'un courant de recharge. L'ouverture de l'interrupteur parallèle doit alors permettre à la tension de remonter à moins que la/les cellules placées en parallèle gardent leur interrupteur parallèle fermé pour une autre raison. Si la tension n'arrive pas à remonter au bout d'un certain temps alors l'interrupteur parallèle est réactivé pour éviter que les interrupteurs parallèles des cellules placées en parallèle supportent tout le courant trop longtemps. Si par contre la tension remonte jusqu'à la tension de la cellule ou au-delà, alors l'interrupteur en série est activé et la cellule se recharge ;
- si une cellule s'est déconnectée suite à une charge trop importante (passage au-dessus d'un seuil de tension), elle peut décider de se réactiver dès que la tension de l'étage tend à être inférieure à celle de la cellule (cas où l'interrupteur parallèle n'a pas été activé). Si l'interrupteur parallèle avait été activé alors la décision de le désactiver peut se faire à partir d'une détection d'un courant dans le circuit de shunt parallèle qui est dans le sens d'un courant de décharge. L'ouverture de l'interrupteur parallèle est alors suivie d'une fermeture de l'interrupteur série, un petit délai entre l'ouverture de l'interrupteur parallèle et l'activation l'interrupteur série peut être prévu afin de laisser le temps à toutes les cellules de détecter le courant de décharge ;

- si une cellule s'est déconnectée suite à un courant trop important et que l'interrupteur parallèle n'a pas été activé, cela signifie que les cellules placées en parallèle ont pu supporter le courant et maintenir la tension, alors la cellule peut tenter de se reconnecter dès que la tension de l'étage est suffisamment proche de la tension de la cellule ;
- Si une cellule s'est déconnectée suite à un courant trop important et que l'interrupteur parallèle a été activé, il est probable que les cellules voisines étaient soit trop chargées, soit trop déchargées et ne participaient plus à l'encaissement du courant. Dans ce cas, dès que le courant qui circule dans l'interrupteur parallèle devient de signe opposé au courant qui a causé la désactivation de la cellule (et on suppose des cellules voisines), alors il est ouvert. Si on est en présence d'un courant de charge alors on active l'interrupteur série dès que la tension se rapproche de la tension de la cellule, et si la tension n'arrive pas à remonter au bout d'un certain temps on réactive l'interrupteur parallèle (on suppose qu'une cellule placée en parallèle n'a pas ré-ouvert son interrupteur parallèle et on ne peut pas lui laisser un courant important trop longtemps). Si on est en présence d'un courant de décharge et que la tension de l'étage commence à chuter alors l'interrupteur série est fermé (c'est-à-dire dès que l'on est certain que l'interrupteur parallèle de toutes les cellules placées en parallèle est ouvert, sinon la tension n'aurait pas pu descendre), un petit délai entre l'ouverture de l'interrupteur parallèle (puis la détection de la chute de tension) et l'activation de l'interrupteur série peut être prévu afin de laisser le temps à toutes les cellules de détecter le courant de décharge puis la chute de tension ;
- si une cellule s'est déconnectée suite à une défaillance irrémédiable de celle-ci, alors l'interrupteur série n'est plus jamais réactivé. En revanche, l'interrupteur parallèle qui doit se fermer dans certains cas doit pouvoir aussi s'ouvrir. Si l'interrupteur parallèle a été activé suite à la détection du passage de la tension de l'étage par une valeur inférieure à un seuil (quelques -100 mV) alors celui-ci peut être ré-ouvert lorsque le courant le traversant est un courant de recharge. S'il a été activé suite à la détection du passage de la tension de l'étage par une valeur supérieure à un seuil (tension maximale qu'une cellule peut atteindre en charge) alors il peut être ré-ouvert lorsque le courant le traversant est un courant de décharge. En fait on suppose que ce qui a causé la fermeture généralisée des interrupteurs parallèles provient du fait que les cellules placées en parallèle ont atteint leur pleine charge ou décharge ou sur-courant et que si un courant contraire apparait dans la batterie, alors les cellules placées en parallèle vont se réactiver. Si jamais les cellules voisines placées en parallèle ne se reconnectent pas, alors la tension de l'étage va repartir, soit au-delà de la tension maximale normale soit en dessous de la tension minimale normale et déclencher à nouveau les interrupteurs parallèles des cellules de l'étage ;
- si une cellule s'est déconnectée suite à une défaillance remédiable, alors la cellule peut être reconnectée lorsque la défaillance a disparu (par exemple lorsque sa température est suffisamment redescendue ou si la cellule a été remplacée). Si l'interrupteur parallèle avait été activé, alors on suit le même processus qu'au point précédent.

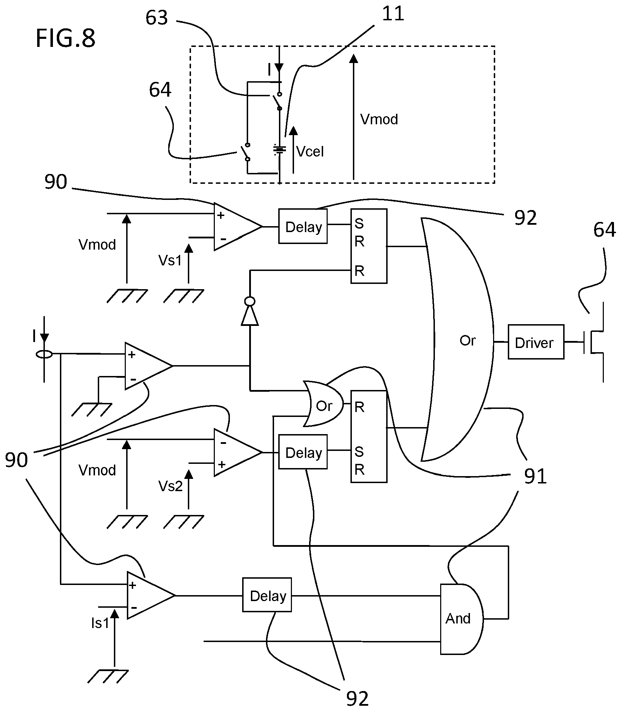

La figure 8 illustre une mise en oeuvre possible selon une telle approche permettant le pilotage d'un transistor parallèle 64. Dans cette implémentation, des capteurs de mesure, non représentés, de la tension d'un module Vmod, de la tension aux bornes d'une cellule Vcel, et du courant I traversant une batterie élémentaire sont utilisés. Ces valeurs mesurées sont comparées à trois valeurs seuil, deux valeurs de seuils haute Vs1 et basse Vs2 pour la tension du module, et une valeur de seuil Is1 pour le courant. Quatre amplificateurs opérationnel 90 (ou comparateurs) permettent de comparer ces valeurs mesurées aux seuils explicités, afin de déterminer, à l'aide de plusieurs opérateurs logiques 91 et de cellules à retard 92, une décision finale d'ouverture ou non du transistor 64. Les cellules à retard « Delay » 92 de ce circuit peuvent, outre leur fonction de retarder la réaction à un événement donné, s'assurer que le résultat de la comparaison est stable sur une certaine durée, et ne prendre en compte une transition que lorsque la stabilité du résultat de la comparaison a été répétée sur une durée prédéfinie, afin d'effacer les mesures brouillées, par exemple suite à des bruits causés par la commutation de cellules de modules voisins.

Un avantage de ce type de pilotage d'un transistor provient du fait qu'il n'y a pas besoin de numériser les signaux mesurés et que la réaction peut être très rapide, sans pour autant nécessiter un échantillonnage très haute-fréquence des signaux. Par ailleurs toutes les opérations peuvent se faire en parallèle, ce qui est très intéressant si on veut que toutes les cellules puissent réagir de manière synchrone, présentent une ouverture ou une fermeture d'un transistor sur la base de la tension de l'étage commune à toutes les cellules de l'étage, et non sur un front d'horloge qui ne serait pas commun à chaque cellule de l'étage car la même horloge ne pourrait être partagée sans sortie supplémentaire sur les cellules.

D'autre part, le procédé de gestion de la batterie met aussi en oeuvre une étape supplémentaire de déconnexion de toutes les batteries élémentaires possibles lors d'un arrêt prolongé d'utilisation de la batterie. Cette étape apporte une sécurité importante, notamment dans les situations particulières comme suite à un accident ou à un incendie. Lorsqu'un nombre important de batteries sont déconnectées, et de préférence toutes les batteries, le risque d'obtenir un court-circuit important entre les batteries, même en cas d'incident important, reste très faible. En outre, grâce à l'isolation des batteries, on évite qu'elles ne se déchargent par des courants de fuite.

En remarque, la communication au sein de la batterie et/ou vers une unité extérieure peut se faire selon un principe de courant porteur, dès lors que le courant demandé par une charge ou fourni par une source n'est pas trop important pour autoriser la déconnection de certaines cellules. En effet, ce principe repose sur une alternance volontaire de connexions et déconnexions de certaines cellules de la batterie, afin de créer une modulation de courant induit et une modulation de puissance au niveau d'un module, qui se propage à l'ensemble de la batterie et au-delà. Cette modulation de puissance est donc visible par les autres modules de la batterie et par une charge extérieure, ce qui permet de l'utiliser pour transmettre des informations selon n'importe quel protocole de communication, existant et normalisé ou non. Il peut par exemple être défini un circuit maître qui interroge tour à tour toutes les cellules, par leur adresse, chaque cellule répondant ensuite dans un créneau temporel dédié. Le maître peut par exemple demander une information comme une mesure de tension, courant et/ou température à une certaine cellule, puis cette dernière peut envoyer l'information demandée avec éventuellement un code permettant d'informer d'une éventuelle défaillance ou non. Ce principe permet ainsi à différentes cellules de la batterie de communiquer simplement entre elles, ou de communiquer vers un calculateur central ou un circuit de traitement de la batterie ou vers une unité extérieure. En remarque, la modulation de courant peut se faire sans déconnecter complètement une cellule, mais simplement en modulant la résistance à l'état passant du transistor de cellule, c'est-à-dire en modulant la tension de grille du transistor autour d'un point de polarisation. Cela évite que la cellule soit complètement déconnectée et surcharge trop les autres cellules de l'étage qui prennent le relais sur la circulation du courant. Cette modulation de résistance à l'état passant peut aussi se faire sur le transistor de module lorsque celui-ci est activé. Cela permet alors de communiquer même si l'étage est désactivé par l'ouverture des transistors de cellule. La communication par courant porteur permet de moduler un courant important au niveau de l'étage sans pour autant engendrer de pertes électriques importantes. En effet, cette modulation de courant se fait en modulant une consommation de courant simplement stocké et déstocké puisqu'appartenant à une batterie, ce qui fait qu'il n'existe pas les pertes qui existent dans un élément dissipatif comme une résistance ou un transistor en mode linéaire utilisé classiquement pour un système de courant porteur.

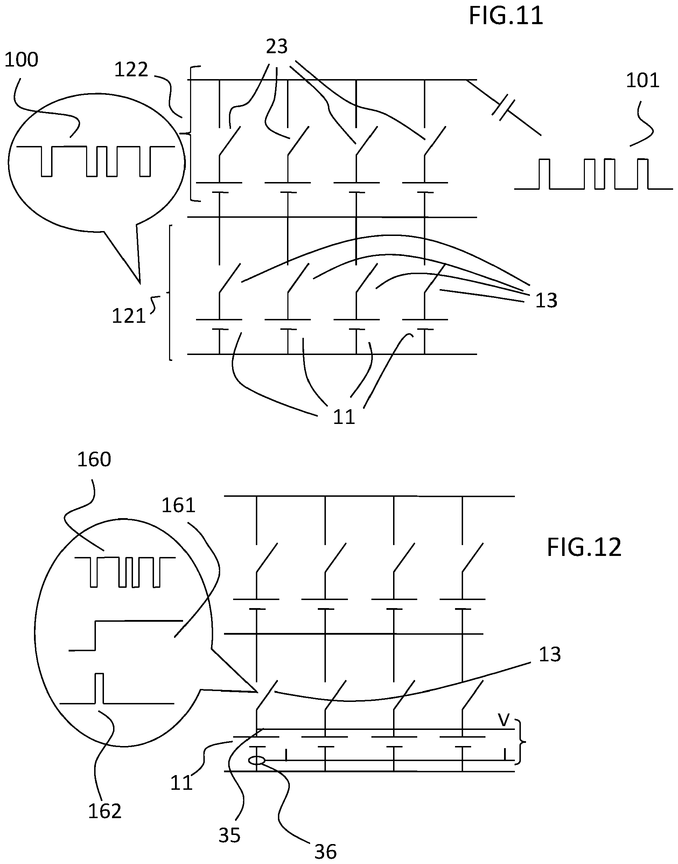

La figure 11 illustre ainsi schématiquement la mise en oeuvre de principe, sur laquelle un premier module 121 d'une batterie génère un signal de communication 100 par l'actionnement d'au moins un interrupteur de cellule 13, alors qu'un signal correspondant 101 est ensuite reçu au niveau d'un second module 122 de la batterie.

De plus, l'architecture de la solution de batterie décrite précédemment permet la mise en oeuvre d'autres fonctions intéressantes.

Une première fonction consiste en une mesure d'impédance électrique. Pour cela, il est possible de fermer et/ou ouvrir l'interrupteur série 13 associé à une cellule 11, pour permettre ou pas à une partie du courant circulant dans le pack batterie, de passer par la cellule. En contrôlant les instants de passage du courant dans la cellule et en mesurant le courant et tension au niveau de la cellule 11, il est possible d'en déduire l'impédance électrique complexe de la cellule. Des méthodes classiques telles que la réponse à un bruit blanc 160, à un échelon 161 ou à une impulsion 162 sont bien connues pour identifier les caractéristiques électriques d'un élément électrique, comme cela est représenté sur la figure 12. Cette mesure d'impédance électrique complexe permet potentiellement de donner des informations supplémentaires par rapport aux mesures de courant, tension et température pour mieux estimer l'état de charge et de santé de la cellule.

Cette mesure d'impédance complexe sur la base d'une commande bien définie de l'interrupteur série est avantageusement effectuée pendant que les autres cellules du module prennent le relais du courant lorsque que l'interrupteur série est ouvert. En variante, il est aussi possible d'effectuer cette mesure sur la base du fonctionnement normal de la batterie, qui génère naturellement des échelons de courant dans les cellules lorsque les cellules (ou le module) sont activées.

Si le courant consommé dans le pack batterie est plus ou moins continu ou basse fréquence, il peut être nécessaire d'utiliser des captateurs de courant qui passent le continu pour le mesurer (capteurs qui mesurent le champ magnétique à proximité du passage du courant, capteur à effet hall ou utilisation de résistances de shunt). Ces capteurs ont la particularité d'être relativement couteux et gourmand en énergie. Pour s'affranchir de cette limitation, il est possible grâce à l'architecture retenue, d'artificiellement augmenter la fréquence du courant consommé dans les cellules par rapport au courant circulant dans la charge. En effet, on peut alterner les cellules utilisées au niveau des modules et on peut alterner les modules utilisés pour générer la tension de sortie. On peut aussi faire une connexion/déconnexion rapide d'une cellule juste au moment ou l'on veut mesurer son courant. Ce hachage de courant au niveau des cellules ou modules permet de plus facilement mesurer le courant puisque la fréquence de ce dernier est augmentée. On peut par exemple utiliser un simple transformateur de courant qui peut être intégré directement sur une carte PCB qui sert de support à l'électronique de mesure. En déconnectant la cellule, on annule le courant qui traverse la cellule et on dé-sature le matériau magnétique du transformateur de courant (saturation liés par exemple à la circulation d'un courant continu ou très basse fréquence). Lorsque l'on reconnecte la cellule, le transformateur de courant se comporte comme un vrai transformateur de courant jusqu'à ce que le matériau soit à nouveau saturé. Avant cette saturation, on en profite pour faire la mesure de courant au secondaire du transformateur. Finalement, on déconnecte temporairement la cellule à chaque fois que l'on veut faire une mesure de courant.

Une seconde fonction est une mesure de courant. On peut par ailleurs déconnecter temporairement la cellule (plus éventuellement éviter que le courant ne passe par une diode inverse) pour calibrer d'autres types de capteur de courant : on sait que lorsque la cellule est déconnectée, le courant qui la traverse est nul, ce qui permet de calibrer le zéro du capteur. On peut aussi calibrer d'autres points de la caractéristique du capteur si on fait circuler dans le pack batterie un courant calibré connu (par exemple au moment de la recharge du pack), ou que l'on mesure le courant avec un capteur de courant calibré et précis au niveau du pack batterie. Ensuite, en aiguillant le courant d'une cellule à l'autre au niveau de chaque étage en connectant une à une les cellules, on peut calibrer le capteur de courant de chaque cellule vis-à-vis de ce point de courant et faire de même pour d'autres points de courant. Au final, si on extrapole un peu plus le concept, avec un seul capteur de courant calibré, stable et précis placé dans le pack batterie (au niveau d'une cellule ou du pack), on peut, avec le jeu d'interrupteurs, calibrer tous les autres capteurs de courant du pack batterie. Cette possibilité de calibration en temps réel des capteurs de courant, notamment durant le fonctionnement du pack batteries, permet d'utiliser des capteurs très bas coût (puisqu'ils n'ont pas besoin d'être très stables sur le long terme).

Une troisième fonction consiste en une calibration de la mesure de l'état de charge ou de l'état de santé de la batterie. Pour calculer l'état de charge d'une cellule, la solution la plus courante est de mesurer la tension aux bornes de la cellule. Pour les batteries élémentaires dont la partie active repose sur un principe chimique avancé, de type Lithium-ion Fer Phosphate, la mesure de la tension n'est pas très précise car cette dernière dépend plutôt de la température que de l'état de charge, surtout lorsque l'on est loin de la fin de charge ou de décharge. Pour avoir une mesure plus précise de l'état de charge, il est connu que l'on peut intégrer le courant qui traverse la cellule. En partant d'un état déchargé et que l'on intègre le courant (nombre d'ampères-heures accumulés) et que l'on connait la capacité de la cellule (nombre d'ampères-heure que la batterie élémentaire peut stocker) alors on peut en déduire, en faisant le rapport des deux valeurs, le taux de charge de la cellule. Cette solution est plutôt fiable, mais elle demande des calibrations régulières, car le calcul d'intégration du courant à tendance à dériver au court du temps en raison d'imprécisions sur la mesure du courant, des courants de fuite qui ne sont pas pris en compte, et en raison du fait qu'en vieillissant la cellule perd de sa capacité (le nombre d'ampères-heure stockable diminue). Il est donc nécessaire de faire des calibrations. Pour cela, une solution actuelle consiste à charger et/ou décharger complètement le pack batterie au bout d'un certain nombre de cycles ou d'un certain temps d'utilisation. Une décharge complète suivit d'une recharge complète permet par exemple de mettre à jour la capacité de stockage de la cellule (nombre d'ampères-heure). Cette opération prend un temps assez important, pour une durée de deux à trois fois plus importante que la durée d'une simple situation de recharge normale de batterie. De plus, cette opération consomme de l'énergie en partie perdue (durant la décharge complète).

Pour s'affranchir de ces inconvénient, l'architecture de batterie selon la solution permet de réaliser ces opérations, non pas sur le pack batterie complet, mais simplement sur une partie des cellules du pack batterie, afin de pouvoir continuer à utiliser le pack batterie pendant ces phases de calibration, avec une capacité totale disponible réduite de seulement quelques pourcents. La calibration consiste alors à décharger et charger complètement une ou quelques cellules de la batterie, et à remettre à jour la capacité de la cellule ainsi que son compteur d'ampères-heure. A partir de cette analyse sur quelques cellules, il est possible d'en déduire en partie par extrapolation l'état du pack batterie complet. Pour ne pas déséquilibrer le nombre de cycles de charges/décharges effectuées par chacune des cellules, il suffit de changer de cellules de calibration à chaque calibration : on échantillonne à chaque calibration une série de cellules différente.

Une quatrième fonction consiste en une amélioration du fonctionnement d'une cellule. Certaines cellules contiennent une partie active chimique qui vieillit moins vite lorsque leur courant de charge ou de décharge est haché. En effet, pour une même puissance dissipée dans la cellule, il est possible d'atteindre des courants « crêtes » plus élevés si le courant n'est appliqué qu'une certaine proportion du temps, de manière hachée, puisque les pertes sont réduites. Ce courant crête plus élevé se traduit aussi dans la cellule par une tension crête un peu plus élevée que la tension normale de la cellule et celle-ci a tendance à faire déplacer les ions dans la cellule avec plus d'énergie, ce qui à tendance à favoriser leur migration d'une électrode à l'autre et dans une certaine limite à améliorer leur insertion dans l'électrode d'accueille. Ce principe permet à la cellule de limiter sa perte de capacité de stockage d'un cycle de charge/décharge à l'autre et donc de ralentir son vieillissement. Dans le cadre de l'architecture choisie, il est facile d'hacher le courant dans les cellules de la batterie, en alternant le passage du courant global utile d'une cellule à l'autre, par exemple, en connectant les cellules avec un certain rapport cyclique (avec un déphasage dans les connexions/déconnexions des différentes cellules d'un étage) ou en alternant l'activation de modules, en activant les interrupteurs concernés, tout en assurant le bon niveau de tension sur la sortie.

## Revendications

1. Batterie élémentaire (50), comprenant une partie active disposée dans un boîtier (68) et au moins deux bornes (54, 55), **caractérisée en ce qu'**elle comprend au moins un interrupteur série (13 ; 63) disposé au sein de son boitier (68) en série avec la partie active entre les bornes (54, 55) de la batterie élémentaire, apte à déconnecter la partie active d'une des bornes (54 ou 55) de la batterie élémentaire, et **en ce qu'**elle comprend un interrupteur parallèle (64) disposé au sein de son boitier (68) en parallèle entre les deux bornes (54, 55) de la batterie élémentaire.

2. Batterie élémentaire (50) selon la revendication précédente **caractérisée en ce qu'**elle comprend un dispositif de commande d'un interrupteur disposé au sein de son boitier (68).

3. Batterie élémentaire (50) selon l'une des revendications précédentes, **caractérisée en ce qu'**elle comprend au moins un capteur de mesure (62, 65, 66) d'une grandeur caractéristique de son état intégré au sein de son boîtier (68).

4. Batterie élémentaire (50) selon l'une des revendications précédentes, **caractérisée en ce qu'**elle comprend en outre tout ou partie des composants suivants disposés au sein de son boîtier (68) : un circuit de commande (67), et/ou un microcontrôleur (60), et/ou un convertisseur analogique numérique de type CAN, et/ou une interface d'entrée (61), et/ou un capteur de température (62), et/ou au moins un capteur de tension (65), et/ou un capteur de courant (66), et/ou une interface de communication (69) reliée par une voie traversant le boîtier (68) de la batterie élémentaire à une borne de communication (72) accessible depuis l'extérieur de la batterie élémentaire, et/ou un dispositif de communication apte à transmettre une mesure effectuée par un capteur de mesure et à recevoir un ordre d'actionnement d'un interrupteur (63, 64) pour déconnecter ou reconnecter la batterie.

5. Batterie élémentaire (50) selon l'une des revendications précédentes, **caractérisée en ce qu'**elle comprend au moins un composant électronique disposé au sein de son boitier (68) alimenté électriquement par la batterie élémentaire elle-même.

6. Batterie élémentaire (50) selon l'une des revendications précédentes, **caractérisée en ce qu'**elle comprend une carte électronique (70) intégrée à l'intérieur de son boîtier (68), reliée à au moins une borne parmi une borne positive intérieure (54') directement reliée à la partie active de la batterie élémentaire et une borne, et une borne négative (55), et sur laquelle est disposé au moins un interrupteur.

7. Batterie, **caractérisée en ce qu'**elle comprend plusieurs batteries élémentaires (50) selon l'une des revendications précédentes.

8. Batterie selon la revendication précédente, **caractérisée en ce qu'**elle comprend plusieurs modules (12) disposés en série, **caractérisé en ce qu'**au moins un module (12) comprend plusieurs batteries élémentaires (50) selon l'une des revendications 1 à 6, disposées en parallèle.

9. Batterie selon la revendication précédente, **caractérisée en ce que** chaque module comprend une borne inférieure (17) apte à une connexion avec un module inférieur et une borne supérieure (18) apte à une connexion avec un module supérieur, et **en ce qu'**elle comprend un module comprenant au moins deux branches parallèles entre sa borne inférieure (17) et sa borne supérieure (18), chaque branche comprenant une batterie élémentaire (50) selon l'une des revendications 1 à 6.

10. Batterie selon l'une des revendications 7 à 9, **caractérisée en ce qu'**elle comprend un dispositif de communication entre plusieurs batteries élémentaires (50).

11. Véhicule automobile, **caractérisé en ce qu'**il comprend une batterie selon l'une des revendications 7 à 10.

12. Procédé de gestion d'une batterie élémentaire (50) selon l'une des revendications 1 à 6, **caractérisé en ce qu'**il comprend une étape de détermination de la position d'un interrupteur en fonction de l'état de la batterie élémentaire et en fonction du besoin d'une charge reliée à la batterie élémentaire ou en fonction du besoin de recharge de la batterie élémentaire et **en ce qu'**il comprend une étape de by-pass de la batterie élémentaire par fermeture de l'interrupteur parallèle (64) et ouverture de l'interrupteur série (13 ; 63), ce qui permet un passage de courant d'une borne à l'autre de la batterie élémentaire par une voie parallèle à la partie active de la batterie élémentaire.

13. Procédé de gestion d'une batterie élémentaire (50) selon la revendication précédente, **caractérisé en ce qu'**il comprend les étapes suivantes :
- mesure d'au moins une grandeur représentative de l'état de la batterie élémentaire (50) ;
- transmission de la grandeur mesurée à au moins un calculateur ;
- détermination de la position de l'interrupteur série de la batterie élémentaire (50) en prenant en compte la grandeur mesurée ;
- commande de l'ouverture ou fermeture de l'interrupteur série de la batterie élémentaire (50).

14. Procédé de gestion d'une batterie élémentaire (50) selon la revendication précédente, **caractérisé en ce qu'**il comprend une étape consistant à comparer la grandeur mesurée à un seuil pour diagnostiquer l'état de la batterie élémentaire (50), estimer sa charge et/ou son état de santé.

15. Procédé de gestion d'une batterie élémentaire (50) selon la revendication précédente, **caractérisé en ce qu'**il comprend une étape d'ouverture de l'interrupteur série de la batterie élémentaire (50) pour la déconnecter quand elle présente une charge inférieure à un seuil, ou une surcharge, ou quand elle est défaillante.

16. Procédé de gestion d'une batterie selon la revendication 8, **caractérisé en ce qu'**il met en oeuvre un procédé de gestion d'une batterie élémentaire (50) selon l'une des revendications 12 à 15, et **en ce qu'**il comprend une étape de déconnexion de toutes les batteries élémentaires (50) en cas d'arrêt prolongé de la batterie ou d'incident.

## Patentansprüche

1. Primärbatterie (50), umfassend einen aktiven Teil, der in einem Gehäuse (68) angeordnet ist, und mindestens zwei Anschlussklemmen (54, 55), **dadurch gekennzeichnet, dass** sie mindestens einen Reihenschalter (13; 63) aufweist, der im Inneren ihres Gehäuse (68) in Reihe mit dem aktiven Teil zwischen den Anschlussklemmen (54, 55) der Primärbatterie angeordnet ist, der geeignet ist, den aktiven Teil von einer der Anschlussklemmen (54 oder 55) der Primärbatterie zu trennen, und dadurch, dass sie einen Parallelschalter (64) aufweist, der in ihrem Gehäuse (68) parallel zwischen den zwei Anschlussklemmen (54, 55) der Primärbatterie angeordnet ist.

2. Primärbatterie (50) nach dem vorhergehenden Anspruch, **dadurch gekennzeichnet, dass** sie eine Vorrichtung zum Steuern eines Schalters aufweist, der im Inneren ihres Gehäuses (68) angeordnet ist.

3. Primärbatterie (50) nach einem der vorhergehenden Ansprüche, **dadurch gekennzeichnet, dass** sie mindestens einen Sensor zum Messen (62, 65, 66) einer Größe, die für ihren Zustand charakteristisch ist, aufweist, der im Inneren ihres Gehäuses (68) integriert ist.

4. Primärbatterie (50) nach einem der vorhergehenden Ansprüche, **dadurch gekennzeichnet, dass** sie ferner alle oder einen Teil der folgenden Komponenten aufweist, die in ihrem Gehäuse (68) angeordnet sind: einen Steuerkreis (67) und/oder einen Mikrocontroller (60) und/oder einen Analog-Digital-Wandler des Typs CAN und/oder eine Eingangsschnittstelle (61) und/oder einen Temperatursensor (62) und/oder mindestens einen Spannungssensor (65) und/oder einen Stromsensor (66) und/oder eine Kommunikationsschnittstelle (69), die durch einen Pfad, der das Gehäuse (68) der Primärbatterie durchquert, mit einer Kommunikationsklemme (72) verbunden ist, die von dem Äußeren der Primärbatterie zugänglich ist, und/oder eine Kommunikationsvorrichtung, die geeignet ist, eine Messung zu übertragen, die von einem Messsensor durchgeführt wird, und einen Befehl zum Betätigen eines Schalters (63, 64) zu empfangen, um die Batterie abzuschalten oder wieder anzuschalten.

5. Primärbatterie (50) nach einem der vorhergehenden Ansprüche, **dadurch gekennzeichnet, dass** sie mindestens eine elektronische Komponente aufweist, die im Inneren ihres Gehäuses (68) angeordnet ist, die von der Primärbatterie selbst elektrisch gespeist wird.

6. Primärbatterie (50) nach einem der vorhergehenden Ansprüche, **dadurch gekennzeichnet, dass** sie eine elektronische Karte (70) aufweist, die im Inneren ihres Gehäuses (68) integriert ist, die an mindestens eine Anschlussklemme unter einer inneren positiven Anschlussklemme (54'), die direkt an dem aktiven Teil der Primärbatterie und einer Anschlussklemme angeschlossen ist, und einer negativen Anschlussklemme (55) angeschlossen ist und an der mindestens ein Schalter angeordnet ist.

7. Batterie, **dadurch gekennzeichnet, dass** sie mehrere Primärbatterien (50) nach einem der vorhergehenden Ansprüche aufweist.

8. Batterie nach dem vorangehenden Anspruch, **dadurch gekennzeichnet, dass** sie mehrere Module (12) aufweist, die in Reihe angeordnet sind, **dadurch gekennzeichnet, dass** mindestens ein Modul (12) mehrere Primärbatterien (50) nach einem der Ansprüche 1 bis 6 aufweist, die parallel angeordnet sind.

9. Batterie nach dem vorhergehenden Anspruch, **dadurch gekennzeichnet, dass** jedes Modul eine untere Anschlussklemme (17), die für einen Anschluss mit einem unteren Modul geeignet ist, und eine obere Anschlussklemme (18) aufweist, die für einen Anschluss mit einem oberen Modul geeignet ist, und dass sie ein Modul aufweist, das mindestens zwei parallele Zweige zwischen seiner unteren Anschlussklemme (17) und seiner oberen Anschlussklemme (18) aufweist, wobei jeder Zweig eine Primärbatterie (50) nach einem der Ansprüche 1 bis 6 aufweist.

10. Batterie nach einem der Ansprüche 7 bis 9, **dadurch gekennzeichnet, dass** sie eine Kommunikationsvorrichtung zwischen mehreren Primärbatterien (50) aufweist.

11. Kraftfahrzeug, **dadurch gekennzeichnet, dass** es eine Batterie nach einem der Ansprüche 7 bis 10 aufweist.

12. Verfahren zur Verwaltung einer Primärbatterie (50) nach einem der Ansprüche 1 bis 6, **dadurch gekennzeichnet, dass** es einen Schritt zum Bestimmen der Position eines Schalters in Abhängigkeit von dem Zustand der Primärbatterie und in Abhängigkeit von der Notwendigkeit einer Aufladung, die mit der Primärbatterie verbunden ist, oder in Abhängigkeit von der Notwendigkeit einer Wiederaufladung der Primärbatterie aufweist und dass es einen Schritt des Umgehens der Primärbatterie durch Schließen des Parallelschalters (64) und Öffnen des Reihenschalters (13; 63) aufweist, was einen Stromdurchgang von einer Anschlussklemme zur anderen der Primärbatterie durch einen Pfad, der parallel zum aktiven Teil der Primärbatterie ist, ermöglicht.

13. Verfahren zur Verwaltung einer Primärbatterie (50) nach dem vorhergehenden Anspruch, **dadurch gekennzeichnet, dass** es die folgenden Schritte aufweist:
- Messen von mindestens einer Größe, die für den Zustand der Primärbatterie (50) repräsentativ ist;
- Übertragen der gemessenen Größe an mindestens einen Rechner;
- Bestimmen der Position des Serienschalters der Primärbatterie (50), indem die gemessene Größe berücksichtigt wird;
- Steuern des Öffnens oder Schließens des Serienschalters der Primärbatterie (50).

14. Verfahren zur Verwaltung einer Primärbatterie (50) nach dem vorhergehenden Anspruch, **dadurch gekennzeichnet, dass** es einen Schritt aufweist, der darin besteht, die gemessene Größe mit einem Schwellenwert zu vergleichen, um den Zustand der Primärbatterie (50) zu diagnostizieren, ihre Ladung und/oder ihren Gesundheitszustand einzuschätzen.

15. Verfahren zur Verwaltung einer Primärbatterie (50) nach dem vorhergehenden Anspruch, **dadurch gekennzeichnet, dass** es einen Schritt des Öffnens des Serienschalters der Primärbatterie (50) aufweist, um sie abzuschalten, wenn sie eine Ladung unter einem Schwellenwert oder eine Überladung aufweist oder wenn sie defekt ist.

16. Verfahren zur Verwaltung einer Batterie nach Anspruch 8, **dadurch gekennzeichnet, dass** es ein Verfahren zur Verwaltung einer Primärbatterie (50) nach einem der Ansprüche 12 bis 15 umsetzt und dass es einen Schritt des Abschaltens aller Primärbatterien (50) im Fall eines längeren Stillstands der Batterie oder im Fall einer Störung aufweist.

## Claims

1. Elementary battery (50), comprising an active portion arranged in a housing (68) and at least two terminals (54, 55), **characterized in that** it comprises at least one series switch (13; 63) arranged inside its housing (68) in series with the active portion between the terminals (54, 55) of the elementary battery and able to disconnect the active portion from one of the terminals (54 or 55) of the elementary battery, and **in that** it comprises a parallel switch (64) arranged inside its housing (68) in parallel between the two terminals (54, 55) of the elementary battery.

2. Elementary battery (50) according to the preceding claim, **characterized in that** it comprises a device for controlling a switch arranged inside its housing (68).

3. Elementary battery (50) according to either of the preceding claims, **characterized in that** it comprises at least one sensor (62, 65, 66), for measuring a variable characteristic of its state, integrated inside its housing (68).

4. Elementary battery (50) according to one of the preceding claims, **characterized in that** it furthermore comprises all or some of the following components arranged inside its housing (68): a control circuit (67), and/or a microcontroller (60), and/or an analogue-to-digital converter (ADC), and/or an input interface (61), and/or a temperature sensor (62), and/or at least one voltage sensor (65), and/or a current sensor (66), and/or a communication interface (69) linked, via a path through the housing (68) of the elementary battery, to a communication terminal (72) that is accessible from outside the elementary battery, and/or a communication device able to transmit a measurement performed by a measurement sensor and to receive an order to actuate a switch (63, 64) in order to disconnect or reconnect the battery.

5. Elementary battery (50) according to one of the preceding claims, **characterized in that** it comprises at least one electronic component arranged inside its housing (68) and supplied with electric power by the elementary battery itself.

6. Elementary battery (50) according to one of the preceding claims, **characterized in that** it comprises an electronic board (70) integrated inside its housing (68) and linked to at least one terminal from among a positive internal terminal (54') linked directly to the active portion of the elementary battery and a terminal, and a negative terminal (55), and on which at least one switch is arranged.

7. Battery, **characterized in that** it comprises a plurality of elementary batteries (50) according to one of the preceding claims.

8. Battery according to the preceding claim, **characterized in that** it comprises a plurality of modules (12) arranged in series, **characterized in that** at least one module (12) comprises a plurality of elementary batteries (50) according to one of Claims 1 to 6 arranged in parallel.

9. Battery according to the preceding claim, **characterized in that** each module comprises a lower terminal (17) suitable for a connection to a lower module and an upper terminal (18) suitable for a connection to an upper module, and **in that** it comprises a module comprising at least two parallel branches between its lower terminal (17) and its upper terminal (18), each branch comprising an elementary battery (50) according to one of Claims 1 to 6.

10. Battery according to one of Claims 7 to 9, **characterized in that** it comprises a device for communicating between a plurality of elementary batteries (50).

11. Motor vehicle, **characterized in that** it comprises a battery according to one of Claims 7 to 10.

12. Method for managing an elementary battery (50) according to one of Claims 1 to 6, **characterized in that** it comprises a step of determining the position of a switch depending on the state of the elementary battery and depending on the requirements of a load linked to the elementary battery or depending on the need to recharge the elementary battery, and **in that** it comprises a step of bypassing the elementary battery by closing the parallel switch (64) and opening the series switch (13; 63), thereby enabling a flow of current from one terminal of the elementary battery to the other via a path parallel to the active portion of the elementary battery.

13. Method for managing an elementary battery (50) according to the preceding claim, **characterized in that** it comprises the following steps:
- measuring at least one variable representative of the state of the elementary battery (50);
- transmitting the measured variable to at least one computer;
- determining the position of the series switch of the elementary battery (50) by taking account of the measured variable;
- controlling the opening or closure of the series switch of the elementary battery (50).

14. Method for managing an elementary battery (50) according to the preceding claim, **characterized in that** it comprises a step of comparing the measured variable with a threshold in order to diagnose the state of the elementary battery (50), estimate its charge and/or its state of health.

15. Method for managing an elementary battery (50) according to the preceding claim, **characterized in that** it comprises a step of opening the series switch of the elementary battery (50) in order to disconnect the latter when it has a charge lower than a threshold, or an overcharge, or when it is defective.

16. Method for managing a battery according to Claim 8, **characterized in that** it implements a method for managing an elementary battery (50) according to one of Claims 12 to 15, and **in that** it comprises a step of disconnecting all of the elementary batteries (50) in the event of an extended shutdown of the battery or of an incident.
